## Europäisches Patentamt
## European Patent Office
## Office européen des brevets

(11) Veröffentlichungsnummer: **0 097 976**
**B1**

(12) **EUROPÄISCHE PATENTSCHRIFT**

(45) Veröffentlichungstag der Patentschrift:
**18.12.85**

(51) Int. Cl.⁴: **F 23 G 5/00**

(21) Anmeldenummer: **83107173.3**

(22) Anmeldetag: **19.12.80**

(60) Veröffentlichungsnummer der früheren Anmeldung
nach Art. 76 EPÜ: **0031558**

(54) **Brenner, insbesondere zur Verbrennung von Müll in Müllverbrennungsanlagen.**

(30) Priorität: **21.12.79 DE 2951620**

(43) Veröffentlichungstag der Anmeldung:
**11.01.84 Patentblatt 84/2**

(45) Bekanntmachung des Hinweises auf die Patenterteilung:
**18.12.85 Patentblatt 85/51**

(84) Benannte Vertragsstaaten:
**AT BE CH DE FR LI NL**

(56) Entgegenhaltungen:
**CH - A - 482 988**
**DE - A - 2 721 237**
**DE - C - 658 206**
**GB - A - 411 007**
**US - A - 1 598 579**
**US - A - 1 981 947**

(73) Patentinhaber: **Schäfer, Thomas, Kirchgrabenstrasse 18,
D-6234 Hattersheim 3 (DE)**
Patentinhaber: **Schäfer, Winfried,
Kirchgrabenstrasse 18, D-6234 Hattersheim 3 (DE)**

(72) Erfinder: **Schäfer, Thomas, Kirchgrabenstrasse 18,
D-6234 Hattersheim 3 (DE)**
Erfinder: **Schäfer, Winfried, Kirchgrabenstrasse 18,
D-6234 Hattersheim 3 (DE)**

(74) Vertreter: **Blumbach Weser Bergen Kramer Zwirner
Hoffmann Patentanwälte, Sonnenbergerstrasse 43,
D-6200 Wiesbaden 1 (DE)**

## Beschreibung

Die Erfindung bezieht sich auf einen Brenner, insbesondere zur Verbrennung von Müll in Müllverbrennungsanlagen, mit einem von unten in den Brennraum eintretenden Müllförderkanal, der in einem pilzförmigen Brennerkopf endet, der sich über dem Boden des Brennerraumes erhebt, wobei der Brennerkopf eine kegelförmige Mantelfläche aufweist und einen tangential diesen umgebenden Ringraum besitzt.

Bei Müllverbrennungsanlagen besteht allgemein das Bestreben, die anfallende Energie zurückzuführen. Um bei den bekannten Anlagen möglichst die Müllverbrennung energiesparend durchzuführen, wird mit herkömmlichen Brennereinrichtungen gearbeitet. So enthalten bekannte Müllverbrennungsanlagen üblicherweise einen Rost oder Wanderrost, auf dem der Müll grossflächig verbrennt. Dabei soll die Feuerraumtemperatur 1050°C nicht überschreiten, weil andernfalls die Schlackenbeseitigung erschwert wäre. Auf der anderen Seite darf aber die Feuerraumtemperatur 900°C nicht unterschreiten, weil sonst die restlose Verbrennung gefährdet wäre. Es werden deshalb 950°C eingehalten, was jedoch bei einem relativ grossen Feuerraum, wie bei einem Rost vorausgesetzt, schwierig ist, insbesondere auch deshalb, weil die Müllzusammensetzung schwankt. Derartige Müllverbrennungsanlagen, wie sie beispielsweise den Gegenstand des EP-A Nr. 0031558 (Anmeldung Nr. 80108044.1) bilden, bei denen ein von unten in den Brennraum eintretender Müllförderkanal in einem pilzförmigen Brennerkopf endet und ringförmig um den Brennerkopf der Rost ausgebildet ist, sind durch die DE-A Nr. 2721237 und die US-A Nr. 1981947 bekannt. In anderem Zusammenhang ist es bekannt geworden, beim Verbrennen von festen Abfallstoffen diese in einem Schmelzraum in einen flüssigen Zustand zu überführen und an dessen Boden zu sammeln, wie es die CH-A Nr. 482988 zeigt.

Der Erfindung liegt demgegenüber die Aufgabe zugrunde, einen Brenner, insbesondere zur Verbrennung von Müll in Müllverbrennungsanlagen, verfügbar zu machen, bei dem Energie in optimaler Weise ausgenutzt wird, und die Möglichkeit besteht, die anfallende Schlacke zu verwerten.

Die Lösung der Aufgabe besteht darin, dass der den Brennerkopf umgebende Ringraum eine am Boden des Brennerkopfes befindliche, abgedichtete Wanne für flüssige Schlacke bildet und dass der Brennerkopf und die Schlackenwanne aus gegenüber flüssiger Schlacke beständigem Material bestehen.

In zweckmässiger Weise ist vorgesehen, dass die Schlackenwanne einen Ablauf zur kontinuierlichen Entnahme der Schlacke besitzt.

In vorteilhafter Weise sind die nach oben an die Schlackenwanne anschliessenden Wände des Brennertopfes ebenfalls gegenüber flüssiger Schlacke beständig und leiten diese nach unten dem Schlackenbad zu. Dabei sind zweckmässig die Wände zur Rückstrahlung von Wärme hoher Temperatur in Richtung auf den Brennerkopf bzw. den sich im Betrieb darüber bildenden Brennermaterialkegel geeignet.

Die Schlackenwanne kann aus feuerfesten Steinen in kasten- oder kreisförmiger Ausgestaltung hergestellt sein und mit dem Brennerkopf einen ringförmigen Raum für das Schlackenbad bilden.

Gemäss einer Weiterbildung schlägt die Erfindung vor, dass oben am pilzförmigen Brennerkopf Kanäle oder Spalte für Sauerstoff oder mit Sauerstoff angereicherte Luft angeordnet sind. Eine andere vorteilhafte Ausbildung besteht darin, dass der Müllförderkanal in ein ringförmig verlaufendes Leitblech als kegelförmiger Mantelfläche übergeht, die am äusseren Rand einen Ringspalt zur Unterluftführung freilässt. Auch können an der kegelförmigen Mantelfläche Luftsauerstoffkanäle austreten.

In vorteilhafter Weise sind am Umfang des Brennertopfes Einlasskanäle für vorgewärmte Verbrennungsluft vorgesehen, wobei gemäss einer vorteilhaften Ausbildung die Einlasskanäle schräg nach unten gerichtet sind und die austretende Luft den Brennerkopf schraubenförmig umkreist.

Die Erfindung soll nachstehend anhand von Ausführungsbeispielen unter Bezugnahme auf die beigefügten Zeichnungen näher erläutert werden. In den Zeichnungen ist schematisch eine Müllverbrennungsanlage mit dem neuartigen Topfbrenner dargestellt. In den Zeichnungen zeigen:

Fig. 1 eine Müllverbrennungsanlage mit einer ersten Ausführungsform des Brenners, und

Fig. 2 eine abgewandelte Müllverbrennungsanlage mit einer zweiten Ausführungsform des Brenners.

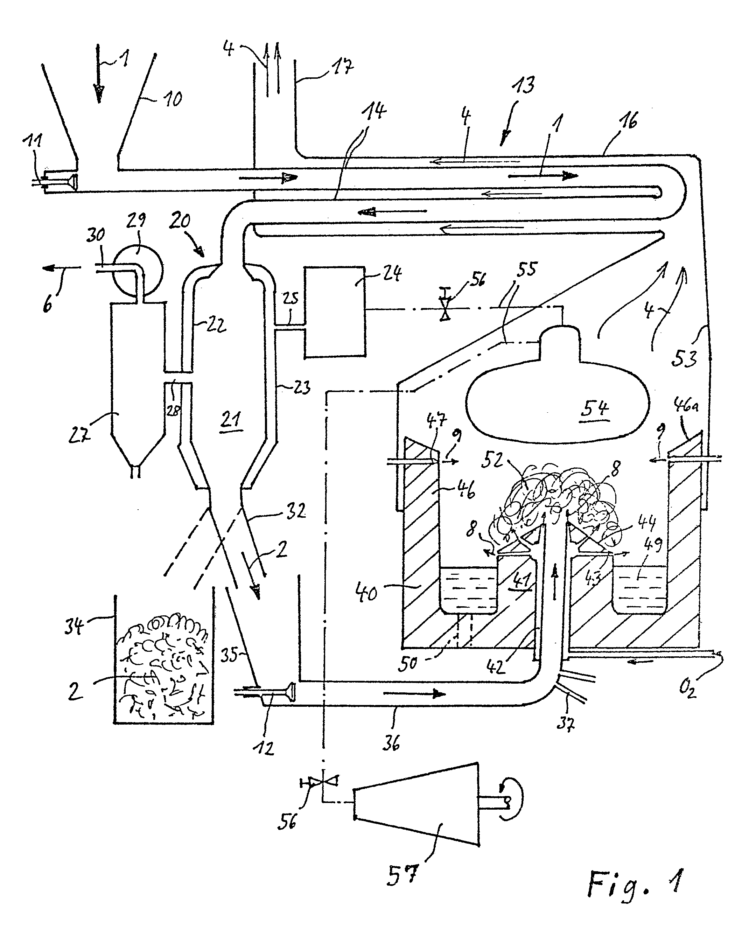

Die in Fig. 1 schematisch dargestellte Müllverbrennungsanlage, wie sie den Gegenstand des EP-A Nr. 0031558 (Anmeldung Nr. 80108044.1) bildet und dort näher beschrieben ist, ermöglicht die fortlaufende Umwandlung von Rohmüll 1 in verwertbare Wärmeenergie und verwertbare Schlacke. Der in einen Einfülltrichter 10 von oben her zugeführte Rohmüll 1 wird von einem Förderstössel 1 (oder einer Förderschnecke) durch einen rohrförmigen Vortrocknungskanal 14 einer Vortrocknungsstufe 13 bewegt und fällt am Ende des Vortrocknungskanals von oben her in einen doppelwandigen Kühltrocknungsbehälter 21 einer Kühltrocknungsstufe 20. Der Vortrocknungskanal 14 ist im Inneren einer Rauchgasführung 16 angeordnet; es wird also die Niedertemperatur-Energie des Müllverbrennungsofens verwertet. Die ausgenutzten Rauchgase 4 werden anschliessend durch eine Esse 17 abgeleitet.

Der im Inneren des Kühltrocknungsbehälters 21 befindliche vorgetrocknete Müll 2 wird durch ein Kältemittel gekühlt, welches sich zwischen einer Innenwand 22 und einer Aussenwand 23 des Behälters 21 befindet und über Leitungen mit einer Kältemaschine 24 in Verbindung steht. Im Innern des Kühltrocknungsbehälters 21 herrscht Unterdruck, erzeugt über einen Absaugkanal 28, der mit einem Absaugbehälter 27 verbunden ist, an den eine Saugpumpe 29 angeschlossen ist. Die im Müll vorhandenen Geruchsstoffe 6 werden über eine Abführleitung 30 abgeleitet.

Über einen eine Weiche bildenden, umschaltbaren Stutzen 32 kann der getrocknete und entgaste Müll 2 aus der Kühltrocknungsstufe 20 wahlweise in einen Speicher 34 oder in einen Trichter 35 eines zum Müllverbrennungsofen führenden Müllförderkanals 36 geschüttet werden.

Ein Förderstössel 12 bewegt den getrockneten Müll 2 durch den Müllförderkanal 36 in den Brenner 40. Der Brenner 40 ist aus feuerfesten Steinen in einer kasten- oder ringförmigen Ausgestaltung hergestellt und besteht aus einem seitlich und unten geschlossenen Brennertopf 46, von dessen Boden sich ein pilzförmiger Brennerkopf 41 mit einer kegelförmigen Mantelfläche 44 erhebt. Der Müllförderkanal 36 tritt in den Boden des Brennertopfs 46 ein und endet an der Spitze des Brennerkopfs 41. Mit dem Brennerkopf 41 am Boden ist ein ringförmiger Raum für ein Schlackenbad 40 vorgesehen. Ein Luft-Sauerstoffkanal 42, der ringförmig den Müllförderkanal 36 umgibt, läuft in oben am pilzförmigen Brennerkopf 41 vorgesehenen Kanälen oder Spalten 43 aus, durch die Sauerstoff oder mit Sauerstoff angereicherte Luft austritt.

Die Schlacke des Schlackenbads 49 kann über einen Ableitungskanal 50 abgelassen werden.

Die Aussenwand des Brennertopfs 46 besitzt eine trichterförmigabgeschrägte Oberseite 46a. Darunter sind am Umfang des Brennertopfs 46 verteilt Einlasskanäle 47 für vorgewärmte Luft 9 vorgesehen, die in eine Verbrennungszone 52 geleitet wird. Auch die vorgewärmte Luft 9 kann ggf. mit Sauerstoff angereichert sein. Infolge der ortlichen Gegebenheiten umkreist die austretende Luft 9 den Brennerkopf 41 schraubenförmig, und zwar weil die Verbrennungszone 52 von einem Verdampfer 54 abgedeckt ist. Bei der Verbrennung entstehende Rauchgase 4 strömen seitlich am Verdampfer 54 vorbei und werden durch eine Haube 53 zur Rauchgasführung 16 der Vortrocknungsstufe 13 geleitet.

Auf diese Weise wird die über dem Brennerkopf 41 vorhandene Verbrennungszone 52 von der Vortrocknungsstufe 13 abgetrennt, und im Brenner 40 erfolgt eine allseitige Wärmerückstrahlung.

Im Verdampfer 54 erzeugter Dampf wird über Dampfleitungen 55, in denen sich Ventile 56 befinden, zur Kältemaschine 24 und in eine Turbine 57 geleitet.

Es wird Rohmüll 1 mit relativ hohem Wassergehalt, wie er gewöhnlich von kommunalen Müllabfuhrunternehmen angeliefert wird, in den Einfülltrichter 10 gefüllt und mit Hilfe des Förderstössels 11 durch die Vortrocknungsstufe 13 bewegt und darin durch die Rauchgase 4 vorgetrocknet. Der vorgetrocknete Müll 2 fällt in den Behälter 21 der Kühltrocknungsstufe 20, in der Unterdruck herrscht. Hierdurch werden Geruchsstoffe 6 entzogen und über den Absaugbehälter 27, die Saugpumpe 29 und die Abführleitung 30 abgeleitet, sowie Wasserdampf niedergeschlagen und abgetrennt.

Im Zuge des kontinuierlich ablaufenden Verfahrens wird der vorgetrocknete Müll 2 aus dem unteren Teil des Kühltrocknungsbehälters 21 mittels eines umschaltbaren Stutzens 32 bedarfsweise entweder in einen Speicher 34 oder einen Trichter 35 des Müllförderkanals 36 geschüttet. In diesem wird der getrocknete Müll 2 durch den Förderstössel 12 (und ggf. eine Förderschnecke) kontinuierlich direkt auf die Mantelfläche 44 des Brennerkopfs 41 transportiert, wo sich ein Müllkegel bildet. Dieser wird von der Verbrennungszone her aufgeheizt, so dass der Müll und das Gas verbrennen. Es geht um eine sehr hohe Verbrennungstemperatur zwischen 1100 und 1600°C, die man im Notfall durch zusätzliche Sauerstoffzufuhr erzielt. Die geschlossene Form des Topfbrenners begünstigt die hohe Temperatur in der Verbrennungszone 52, weil die Wärme von den Wänden des Brenners und des Verdampfers 54 rückstrahlt. Ausserdem nimmt die zugeführte Luft 9 Wärme von den Brennerwänden mit. Bei der erzeugten hohen Temperatur an der Oberfläche des Müllkegels verflüssigen die unbrennbaren Rückstände und fliessen in das Schlackenbad 49 ab.

Gegebenenfalls können Zuschlagstoffe zugesetzt werden, um ein leichtflüssiges Schlackenbad 49 und gewisse Materialeigenschaften zu erzielen, die bei Produkten, wie Splitt, Pflastersteine, geschäumte Schlacke oder Schlackenwolle, wertvoll sind.

Es ist vorgesehen, dem getrockneten Müll 2 beispielsweise im Bereich des Müllförderkanals 36 über geeignete Einführkanäle 37 flüssige oder gasförmige Brenn- oder Zuschlagstoffe, wie Altöl, zuzusetzen. Darin enthaltene Stoffe gehen zum Teil in die abgeleitete Schlacke.

Der im Verdampfer 54 erzeugte Dampf kann vielfach ausgenutzt werden, z. B. für die Aggregate der Anlag (die Kältemaschine 24, die Turbine 57). Ferner besteht die Möglichkeit, den so erzeugten Dampf zu Heizzwecken heranzuziehen.

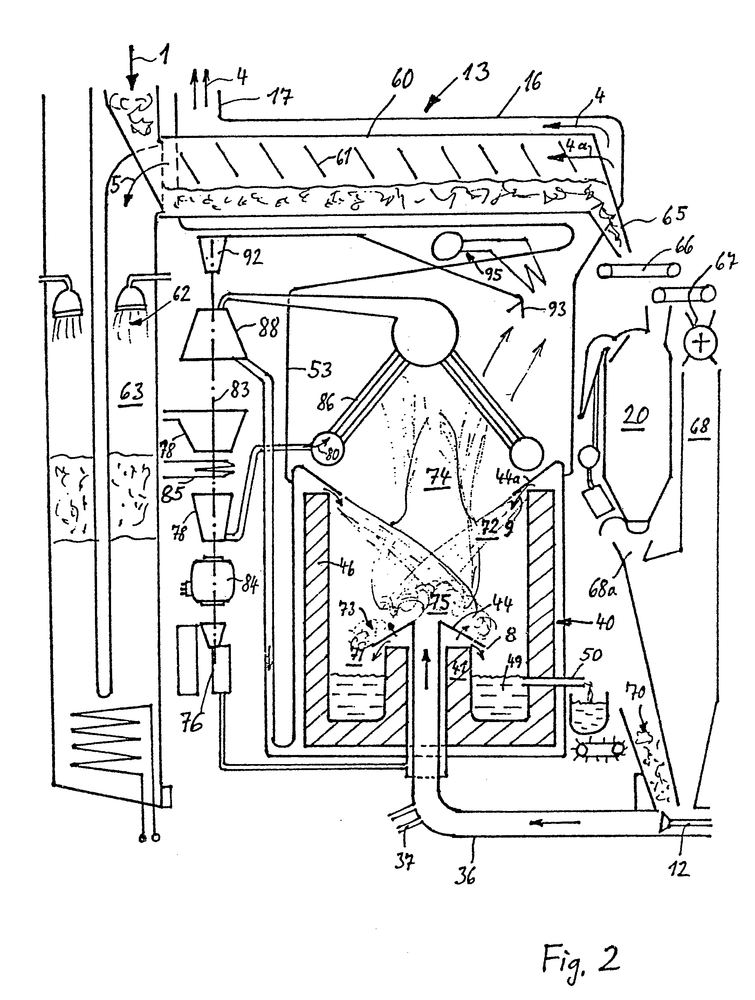

Das in Fig. 2 dargestellte abgewandelte Ausführungsbeispiel besitzt teilweise gleiche oder ähnliche Einrichtungen wie das in Fig. 1 dargestellte Ausführungsbeispiel, die daher die gleichen Bezugszahlen tragen.

Der feuchte Rohmüll 1 gelangt über den gassperrenden Einfülltrichter 10 in eine mit einer Aussenförderschnecke 61 versehene Drehtrommel 60, die sich innerhalb der Rauchgasführung 16 des Brenners 40 befindet und durch die Rauchgase 4 entweder indirekt oder direkt beheizt wird. Am Ende der Drehtrommel 60 tritt das im Rohmüll 1 enthaltene Wasser als Abdampf 5 aus und wird innerhalb eines Abdampfungskanals 63 wahlweise einem Wäscher 62 oder einem Kondensator zugeführt.

Im Wäscher 62 wird der Abdampf direkt kondensiert und seine Wärme über einen Wärmetauscher 64 als Fernwärme abgeführt. Bei der äusserlichen (indirekten) Beheizung der Drehtrommel 60 bleiben Rauchgase und Müll-Wasserdampf getrennt und können getrennt kondensiert bzw. gewaschen werden. Der so entweder ganz oder teilweise getrocknete Müll verlässt die Drehtrommel durch eine gassperrende Aufschüttung 65 und wird wahlweise einer Sortierstufe 66 oder einer Mahlstufe 67 zugeführt. Gemahlener und trockener Müll wird in einem Speicher 68 gebunkert.

Vom Speicher 68 wird der Müll ggf. zusammen mit Zuschlagsstoffen 70 mit dem Förderstössel 12 durch den Müllförderkanal 36 (ggf. unter Zugabe flüssiger oder gasförmiger Brenn- oder Zuschlagstoffe über die Einführkanäle 37) von unten über das Steigrohr in den pilzförmigen Brennerkopf 41 des Brenners 40 gefördert. Die konische Mantelfläche 44 des Brennerkopfs 41 wird durch ein Leitblech gebildet, das am Müllförderkanal 36 angebracht ist, wobei am äusseren Rand ein Ringspalt zur Unterluftführung freigelassen ist. Auf der konischen Mantelfläche 44 des Brennerkopfes 41 bilden sich ein Müllkegel 73, von dem flüssige Schlacke in das flüssige Schlackenbad 49 abfliesst und gleichzeitig Schwelgase freigesetzt werden, die verbrennen. Die unterteilte Luftzufuhr führt zu einer unteren Abbrandzone 71 und einer seitlich oberen Abbrandzone 72 am oberen Ende des Brennertopfes 46. Die vorgewärmte Verbrennungsluft 9 wird beim Eintritt in den Brennertopf durch Leitbleche oder Düsen der Einlasskanäle 47 tangential schräg nach unten geführt und umkreist den Müllkegel 73 tangential. Die Luft kühlt allseitig den Brennertopf und führt von der Feuerung abgehende Wärme konzentrisch wieder auf den Abbrandkegel zurück. Es bildet sich eine schraubenförmige Flamme 74, die an der Stelle der Einlasskanäle 47 eingeschnürt wird, so dass ein fast kugelförmiger Brennraum mit höchstem Wärmerückstau gebildet wird.

Im Kern des Müllkegels 73 bildet sich unter diesem Wärmerückstau eine Pyrolysezone 75. Die erzeugten Schwelgase zusammen mit dem verdampften Restwasser bilden mit der zugeführten Luft ein tangential kreisendes Hochtemperaturwirbelbett um den Müllkegel 73. Asche und Schlacke werden hierbei nach unten aussen abgeschieden und fallen in das flüssige Schlackenbad 49, das über den Ablauf 50 auf gleichem Niveau gehalten wird.

Um die vollständige Verbrennung sicherzustellen und die Temperatur im Schlackenbad 49 hoch genug zu halten, wird in den Luft-Teilstrom der unteren Abbrandzone 71 je nach Brennmaterial ggf. reiner Sauerstoff oder mit Sauerstoff angereicherte Luft verwendet, die bei einer Belüftungsstufe 76 zugesetzt wird.

Mit der Flamme 74 mitgerissene Aschenteile werden aus der sich schraubenförmig nach oben drehenden Flamme 74 ausgeschieden, wenn sie nach der Einschnürung am oberen Brennermantelrand schnell an Geschwindigkeit verliert, und über die trichterförmige Oberseite 46a der Brennerwand 46 dem Schlackenbad 49 zugeführt.

Ferner ist eine Gasturbine 83 mit einem Generator 84 vorhanden, die mittels eines Verdichtersatzes 78 mit Zwischenkühler 85 Luft 80 durch einen im Brennraum des Brenners 40 angeordneten Wärmetauscher 86 in die Turbine 88 leitet, wo sie entspannt und anschliessend dem Brennertopf als vorgewärmte Luft 9 zugeführt wird. Ferner gehört zur Gasturbine 83 ein Verdichter 92, der an einem innerhalb des Brennraums gelegenen Abgasaufnehmer 93 Rauchgase 4 entnimmt und als Prozesswärmeträger verdichtet.

Der so beschriebene Brenner ist optimal für Müllverbrennungsanlagen geeignet und ermöglicht dabei eine Verwertung der anfallenden Schlacken.

**Patentansprüche**

1. Brenner, insbesondere zur Verbrennung von Müll in Müllverbrennungsanlagen, mit einem von unten in den Brennraum eintretenden Müllförderkanal, der in einem pilzförmigen Brennerkopf endet, der sich über dem Boden des Brennerraumes erhebt, wobei der Brennerkopf eine kegelförmige Mantelfläche aufweist und einen tangential diesen umgebenden Ringraum besitzt, dadurch gekennzeichnet, dass der den Brennerkopf (41) umgebende Ringraum (49) eine am Boden des Brennerkopfes (41) befindliche, abgedichtete Wanne (49) für flüssige Schlacke bildet und dass der Brennerkopf (41) und die Schlackenwanne (49) aus gegenüber flüssiger Schlacke beständigem Material bestehen.

2. Brenner nach Anspruch 1, dadurch gekennzeichnet, dass die Schlackenwanne (49) einen Ablauf (50) zur kontinuierlichen Entnahme der Schlacke besitzt.

3. Brenner nach Anspruch 1 oder 2, dadurch gekennzeichnet, dass die nach oben an die Schlackenwanne anschliessenden Wände des Brennertopfes (46) ebenfalls gegenüber flüssiger Schlacke beständig sind und diese nach unten dem Schlackenbad (49) zuleiten.

4. Brenner nach einem der Ansprüche 1 bis 3, dadurch gekennzeichnet, dass die Schlackenwanne (49) und die sich nach oben anschliessende Brennertopfwand zur Rückstrahlung von Wärme hoher Temperatur in Richtung auf den Brennerkopf (41) bzw. den sich im Betrieb darüber bildenden Brennermaterialkegel (52) geeignet ist.

5. Brenner nach einem der Ansprüche 1 bis 4, dadurch gekennzeichnet, dass die Schlackenwanne (49) aus feuerfesten Steinen in kasten- oder kreisförmiger Ausgestaltung hergestellt ist.

6. Brenner nach Anspruch 1, dadurch gekennzeichnet, dass die Schlackenwanne (49) mit dem Brennerkopf (41) einen ringförmigen Raum für das Schlackenbad bildet.

7. Brenner nach einem der Ansprüche 1 bis 6, dadurch gekennzeichnet, dass oben am pilzförmigen Brennerkopf (41) Kanäle oder Spalte (43) für Sauerstoff oder mit Sauerstoff angereicherte Luft angeordnet sind.

8. Brenner nach einem der Ansprüche 1 bis 7, dadurch gekennzeichnet, dass der Müllförderkanal (36) in ein ringförmig verlaufendes Leitblech als kegelförmiger Mantelfläche (44) übergeht, die am äusseren Rand einen Ringspalt zur Unterluftführung freilässt.

9. Brenner nach einem der Ansprüche 1 bis 8, dadurch gekennzeichnet, dass durch die kegelförmige Mantelfläche (44) Luftsauerstoffkanäle austreten.

10. Brenner nach einem der vorangegangenen Ansprüche, dadurch gekennzeichnet, dass am Umfang des Brennertopfes (46) Einlasskanäle (47) für vorgewärmte Verbrennungsluft (9) vorgesehen sind.

11. Brenner nach Anspruch 10, dadurch gekennzeichnet, dass die Einlasskanäle (47) schräg nach unten gerichtet sind und die austretende Luft den Brennerkopf (41) schraubenförmig umkreist.

## Claims

1. Burner, especially for the combustion of refuse in incineration plants, having a refuse conveying conduit entering the combustion chamber from below, and ending in a mushroom-shaped burner head, and which rises above the floor of the combustion chamber, wherein the burner head has a conical-shaped shell and possesses an enveloping annular space arranged tangentially to same, characterised in that the annular space (49) enveloping the burner head (41) forms a sealed trough (49) found on the floor of the burner head (41) for fluid slag, and that the burner head (41) and the slag trough (49) consist of material which is permanent as opposed to fluid slag.

2. Burner according to Claim 1, characterised in that said slag trough (49) has an outlet (50) for the continuous removal of slag.

3. Burner according to Claims 1 or 2, characterised in that the burner container (46) walls which are upwardly attached to the slag trough, are likewise permanent as opposed to the fluid slag, and supply same downwardly to the slag bath (49).

4. Burner according to any of Claims 1 to 3, characterised in that said slag trough (49) and the upwardly adjoining burner container wall are suitable for the reflection of high temperature heat in the direction of the burner head (41) i.e. the burner material cone (52) formed during operation over same.

5. Burner according to any of Claims 1-4, characterised in that said slag trough (49) is produced from refractory stone in a box or circular-shaped arrangement.

6. Burner according to Claim 1, characterised in that said slag trough (49) forms together with said burner head (41), an annular-shaped space for the slag bath.

7. Burner according to any of Claims 1-6, characterised in that conduits or gaps (43) are arranged above on said mushroom-shaped burner head (41) for oxygen or air enriched with oxygen.

8. Burner according to any of Claims 1-7, characterised in that said refuse conveying conduit (36) is an annular-shaped extending bafle which becomes a conical-shaped shell, which leaves free an annular gap on the outer edge for air to circulate under.

9. Burner according to any of Claims 1-8, characterised in that air/oxygen conduits emerge through the conical-shaped shell (44).

10. Burner according to any of the preceding claims, characterised in that inlet conduits (47) are provided for preheated combustion air (9) on the periphery of burner head (46).

11. Burner according to Claim 10, characterised in that said inlet conduits (47) are directed sloping downwardly and the emerging air spirally circulates said burner head (41).

## Revendications

1. Brûleur, en particulier pour la combustion de déchets dans des installations de combustion de déchets, muni d'un canal de transport de déchets pénétrant par le bas dans la chambre de combustion et qui se termine par une tête de brûleur en forme de champignon qui se dresse au-dessus du fond de la chambre de combustion, la tête de brûleur présentant une surface latérale conique et une cavité annulaire entourant celle-ci tangentiellement, caractérisé par le fait que la cavité annulaire (49) entourant la tête de brûleur (41) forme pour les scories liquides une cuve étanche (49) située au fond de la tête de brûleur (41) et que la tête de brûleur (41) et la cuve à scories (49) sont formées d'un matériau résistant aux scories liquides.

2. Brûleur selon la revendication 1, caractérisé par le fait que la cuve à scories (49) présente une décharge (50) pour le retrait continu de celles-ci.

3. Brûleur selon l'une des revendications 1 ou 2, caractérisé par le fait que les parois du pot de brûleur (46) se raccordent vers le haut à la cuve à scories, résistent également aux scories liquides et conduisent celles-ci vers le bas, en direction du bain de scories (49).

4. Brûleur selon l'une des revendications 1 à 3, caractérisé par le fait que la cuve à scories (49) et la paroi du pot de brûleur qui s'y raccorde vers le haut sont capables de réfléchir de la chaleur à haute température en direction de la tête de brûleur (41) et/ou du cône de matériau (52) qui se forme au-dessus, en service.

5. Brûleur selon l'une des revendications 1 à 4, caractérisé par le fait que la cuve à scories (49) est fabriquée en briques réfractaires avec une constitution en forme de boîte ou circulaire.

6. Brûleur selon la revendication 1, caractérisé par le fait que la cuve à scories (49) forme avec la tête de brûleur (41) une cavité annulaire pour le bain de scories.

7. Brûleur selon l'une des revendications 1 à 6, caractérisé par le fait qu'en haut de la tête de brûleur en forme de champignon (41) sont disposés des canaux ou fentes (43) destinés à de l'oxygène ou de l'air enrichi en oxygène.

8. Brûleur selon l'une des revendications 1 à 7, caractérisé par le fait que le canal de transport de déchets (36) débouche sur un déflecteur de forme annulaire ayant une surface latérale conique (44) qui ménage au bord extérieur un interstice annulaire pour l'amenée d'air par-dessous.

9. Brûleur selon l'une des revendications 1 à 8, caractérisé par le fait que des canaux à air et/ou à oxygène débouchent sur la surface latérale conique (44).

**0 097 976**

10. Brûleur selon l'une des revendications précédentes, caractérisé par le fait qu'à la circonférence du pot de brûleur (46) sont prévus des canaux d'admission (47) pour de l'air comburant préchauffé (9).

11. Brûleur selon la revendication 10, caractérisé par le fait que les canaux d'admission (47) sont dirigés obliquement vers le bas et que l'air sortant tourne hélicoïdalement autour de la tête de brûleur (41).

0 097 976

Fig. 1

7

Fig. 2